**Europäisches Patentamt**

(19) **European Patent Office**

**Office européen des brevets**

(11) Numéro de publication : **0 271 516 B1**

(12) **FASCICULE DE BREVET EUROPEEN**

(45) Date de publication du fascicule du brevet :
**10.04.91 Bulletin 91/15**

(51) Int. Cl.$^5$ : **F16K 31/122, F15B 11/12,
F15B 15/24**

(21) Numéro de dépôt : **87903339.7**

(22) Date de dépôt : **20.05.87**

(86) Numéro de dépôt international :
**PCT/FR87/00173**

(87) Numéro de publication internationale :
**WO 87/07352 03.12.87 Gazette 87/27**

(54) **VANNE DE DISTRIBUTION DE LIQUIDE.**

(30) Priorité : **21.05.86 FR 8607209**

(43) Date de publication de la demande :
**22.06.88 Bulletin 88/25**

(45) Mention de la délivrance du brevet :
**10.04.91 Bulletin 91/15**

(84) Etats contractants désignés :
**AT BE CH DE GB IT LI LU NL SE**

(56) Documents cités :
**DE-A- 1 600 749
DE-A- 2 706 107
DE-A- 2 854 550
DE-A- 2 943 332
DE-B- 1 500 215
FR-A- 2 371 209
GB-A- 567 728**

(73) Titulaire : **BAXTER INTERNATIONAL INC. (a
Delaware corporation)
One Baxter Parkway
Deerfield Illinois 60015 (US)**

(72) Inventeur : **SUSINI, Etienne
8, chemin de la Vallée
F-94440 Villecresnes (FR)**
Inventeur : **SOUBRIER, Pierre
62, boulevard Louis Schmidt
B-1040 Bruxelles (BE)**

(74) Mandataire : **Fruchard, Guy et al
CABINET BOETTCHER 23, rue la Boétie
F-75008 Paris (FR)**

## Description

La présente invention concerne une vanne de distribution de liquide. L'invention s'applique notamment, bien que non exclusivement, au remplissage de pochés de perfusion.

On connaît des machines pour la réalisation de poches à partir d'un film souple en matière plastique. En particulier, on connaît des machines pour la réalisation de poches à partir d'un film thermoplastique. Ces machines comprennent une série de postes où le film est traité de façon successive. En général, le film est déroulé à partir d'un bobinoir, puis perforé. Au droit des perforations, des embouts sont soudés par une tête de soudage puis le film est conformé dans un conformateur principalement destiné à replier le film sur lui-même en vue d'effectuer une soudure bord à bord. Le film ainsi soudé bord à bord forme un tube qui est ensuite soudé transversalement à intervalles réguliers, afin de former des poches individuelles, ces poches individuelles étant remplies préalablement à la réalisation de la seconde soudure transversale délimitant la poche.

La présente invention concerne plus particulièrement la vanne de distribution de liquide servant au remplissage de la poche. A ce propos, on notera que la poche est généralement remplie à partir d'une cuve à niveau constant ou au moyen d'un circuit d'alimentation à pression constante. Le remplissage de la poche est lui-même effectué selon une durée constante, quelle que soit la quantité de liquide que l'on souhaite introduire dans la poche. Dans ces conditions, la quantité finale de liquide contenu dans la poche dépend de la section d'ouverture de la vanne de distribution.

On connaît, en particulier du document DE-A-1.600.749, des vannes de remplissage comportant un corps de vanne équipé d'un canal d'alimentation et d'un canal de distribution et un siège entre le canal d'alimentation et le canal de distribution ; un obturateur monté de façon mobile en regard du siège ; des moyens de commande d'obturateur pour positionner l'obturateur par rapport au siège, ces moyens de commande d'obturateur comportant des moyens mobiles par échelons reliés à l'obturateur par une tige de liaison commune ; et des moyens de fermeture de vanne en l'absence de fluide de commande. Dans ce dispositif l'ensemble des moyens mobiles par échelons est ramené vers une position de fermeture de l'obturateur par un ressort et chacun des moyens mobiles par échelon agit contre ce ressort.

Un but de la présente invention est de proposer une vanne de distribution du type précité comportant de nouveaux moyens de fermeture en l'absence de fluide de commande.

Pour cela on prévoit selon l'invention une vanne de distribution de liquide comprenant un corps de vanne ayant un canal d'alimentation, un canal de distribution et un siège entre le canal d'alimentation et le canal de distribution ; un obturateur monté de façon mobile en regard du siège ; des moyens de commande d'obturateur pour positionner l'obturateur par rapport au siège, ces moyens de commande d'obturateur comportant des moyens mobiles par échelons, reliés à l'obturateur par une tige de liaison commune et des moyens de fermeture de vanne en l'absence de fluide de commande caractérisé en ce que les moyens de fermeture de vanne en l'absence de fluide de commande comprennent un piston d'ouverture maximale associé à la tige de liaison commune un ressort agissant sur le piston d'ouverture maximale dans le sens de la fermeture de la vanne, et une chambre d'ouverture maximale opposée à l'action du ressort, la chambre d'ouverture maximale ayant un orifice d'alimentation en fluide de commande.

D'autres caractéristiques de l'invention apparaissent dans les revendications dépendantes.

Selon un aspect préféré de l'invention, le piston d'ouverture maximale a une section efficace inférieure aux pistons d'ouverture partielle. Ainsi, en utilisant le même fluide de commande pour la chambre d'ouverture et pour l'orifice d'admission associé aux pistons d'ouverture partielle on obtient un équilibre du dispositif qui dépend uniquement du piston d'ouverture partielle soumis au fluide de commande.

D'autres caractéristiques et avantages de l'invention apparaîtront à la lumière de la description qui suit en liaison avec les dessins ci-joints, parmi lesquels :

— la figure 1 est une vue en élévation partiellement en coupe d'un dispositif de distribution de liquide comportant une vanne de distribution selon l'invention,

— la figure 2 est une vue partielle en coupe agrandie de la vanne de distribution de l'invention,

— les figures 3 à 5 sont des vues en coupe schématique illustrant le fonctionnement de la vanne de distribution selon l'invention.

En référence aux figures, la vanne de distribution de liquide selon l'invention comprend un corps de vanne 1, ayant un canal d'alimentation 2, un canal de distribution 3 et un siège 4 entre le canal d'alimentation 2 et le canal de distribution 3. Un obturateur 5 est monté de façon mobile en regard du siège 4. Par ailleurs, la vanne comporte des moyens de commande d'obturateur généralement désignés en 6, comprenant des pistons d'ouverture partielle 7.1, 7.2, 7.3 solidaires de tigres, respectivement 8.1, 8.2, 8.3, séparées les unes des autres et montées en série dans un boîtier de commande 9 comportant, pour chaque piston d'ouverture partielle, un orifice d'admission en fluide de commande, respectivement 9.1, 9.2, 9.3, et une butée de fin de course dans le sens de la fermeture, respectivement 10.1, 10.2, 10.3. Les butées de fin de course 10.1, 10.2, 10.3 sont réalisées sous forme de bagues amovibles reposant sur des épaulements internes du boîtier 9, respectivement 11.1, 11.2, 11.3. Bien entendu, les épaulements 11.1, 11.2, 11.3 seraient difficilement réalisables dans un boîtier en une seule pièce et le boîtier 9 est donc réalisé en plusieurs parties réunies entre elles d'une façon classique (non représentée), par exemple au moyen de boulons s'étendant longitudinalement dans la paroi du boîtier et vissés dans la tête de boîtier 12.

La vanne comprend en outre une tige de liaison commune 13, coaxiale aux tiges 8.1, 8.2, 8.3 des pistons d'ouverture partielle et fixée à l'une de ses extrémités à l'obturateur 5. La vanne comporte enfin des moyens d'ouverture maximale associés à la tige de liaison commune 13. Dans le mode de réalisation illustré, les moyens d'ouverture maximale sont combinés avec des moyens de fermeture de vanne en l'absence de fluide de commande et comprennent un piston d'ouverture maximale 14 fixé sur la tige de liaison commune 13. Le piston d'ouverture maximale 14 est sollicité dans le sens de la fermeture de la vanne par un ressort 15 coaxial à la tige de liaison commune 13 et ayant une extrémité s'appuyant sur le piston 14 et une autre extrémité s'appuyant sur un couvercle 16 de la tête de boîtier 12. Le couvercle 16 est relié à la partie de boîtier portant l'épaulement interne 11.1 par des colonnettes 17.

Une chambre d'ouverture maximale 18 est ménagée dans la tête de boîtier 12 et est en liaison avec une face du piston d'ouverture maximale 14 opposée au ressort 15. La chambre d'ouverture maximale 18 est pourvue d'un orifice d'alimentation en fluide de commande 19.

La tête de boîtier 12 comporte des moyens de réglage de l'ensemble des moyens mobiles par rapport au corps de vanne. Ces moyens de réglage comportent un écrou 20 dont le filetage interne coopère avec un filetage externe 21 réalisé sur la tête de boîtier 12 coaxialement aux tiges des pistons d'ouverture partielle. L'écrou 20 est relié au corps de vanne 1 par une pièce tubulaire 22 fixée au corps de vanne 1 par une bride 23. La pièce tubulaire 21 sert également de guide pour la tige de liaison commune 13. L'écrou 20 est maintenu axialement en position par un clip 24 engagé dans une rainure circulaire de la pièce tubulaire 22 et sépare de l'écrou 20 par une rondelle 25.

Des moyens sont en outre prévus pour empêcher le boîtier 9 de tourner avec l'écrou 20. Ces moyens comprennent une vis 26 fixée transversalement à la tête de boîtier 12 et prise entre les dents d'une fourchette 27 solidaire d'une potence 28, elle-même fixée sur la pièce tubulaire 22 par une vis 29.

L'écrou 20 est entraîné en rotation par des moyens de commande comprenant un premier pignon conique 30 fixé sur l'écrou 20 et un second pignon conique 37 associe à un mecanisme de commande à distance comprenant un câble flexible 32 dont la gaine 33 est fixée à la potence 28.

Le corps de vanne 1 est relié à une tubulure d'admission 34 et à une tubulure de distribution 35 par des brides, respectivement 36 et 37. La tubulure d'admission 34 est elle-même raccordée à une cuve à niveau constant 38 équipée d'une façon classique d'un flotteur 39 relié à un clapet 40 par une tringlerie 41.

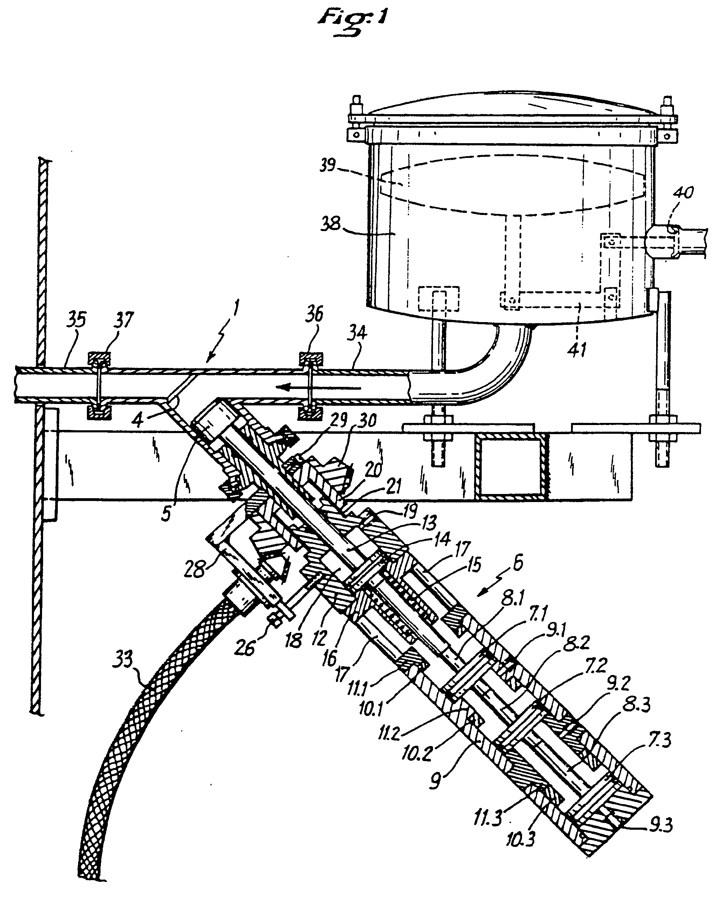

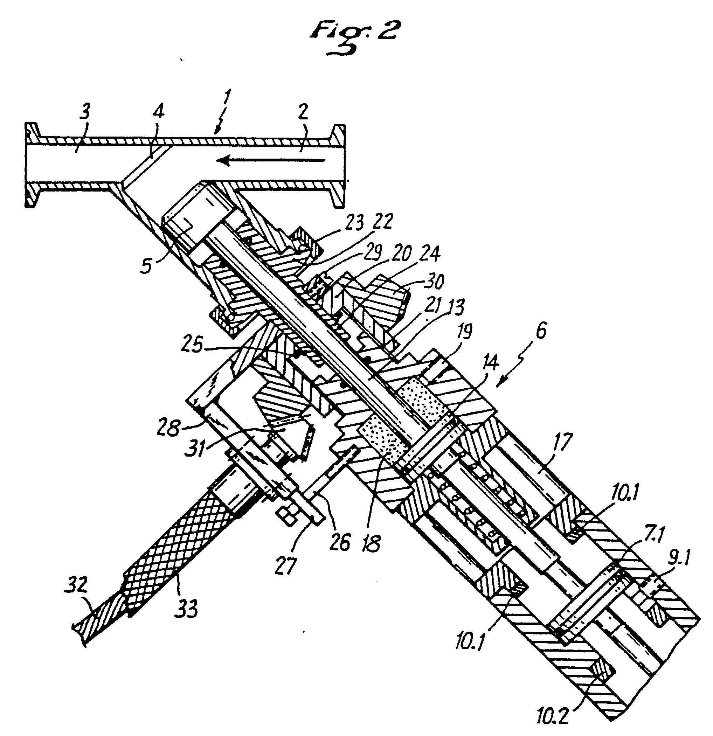

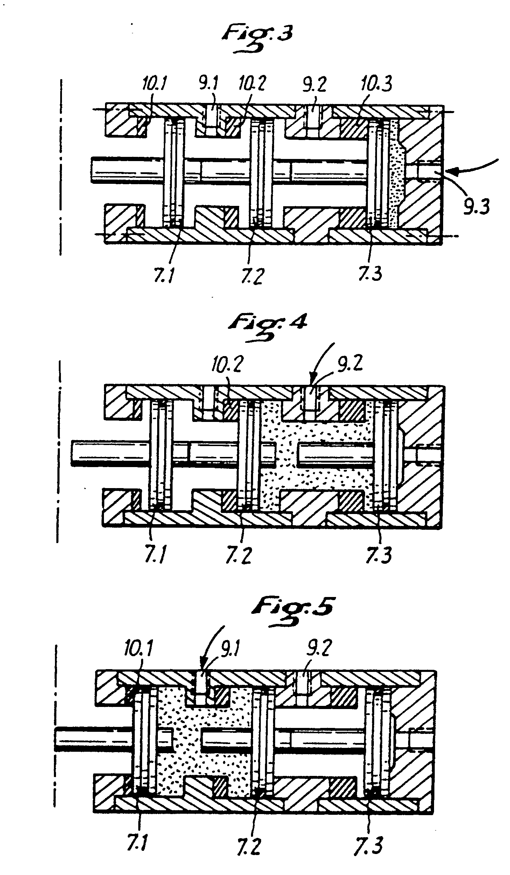

Le fonctionnement du dispositif est le suivant : lorsqu'aucun fluide de commande n'est fourni à la vanne de distribution, le ressort 15 repousse le piston d'ouverture maximale 14 qui entraîne la tige de liaison commune 13, et par conséquent l'obturateur 5, vers la position de fermeture totale. Lorsque du fluide de commande est fourni à l'orifice d'admission 19, le piston 14 est repoussé à l'encontre de l'action du ressort 15 et vient en butée sur le couvercle 16, provoquant ainsi l'ouverture maximale de la vanne. On remarque sur les figures 1 et 2 que le piston d'ouverture maximale 14 a une section efficace inférieure aux pistons d'ouverture partielle 7.1, 7.2, 7.3 ; en conséquence, lorsque le même fluide de commande est admis simultanément dans la chambre 18 et à l'orifice d'admission 9.3, le piston 7.3 est repoussé dans le sens de la fermeture et vient en butée sur la butée de fin de course 10.3 dont l'épaisseur détermine donc le degré d'ouverture de la vanne. Lorsque du fluide de commande est admis simultanément dans la chambre 18 et à l'orifice d'admission 9.2, la vanne prend la position d'équilibre présentée sur la figure 4, c'est-à-dire que le piston 7.3 est repoussé vers l'extrémité du boîtier 9 tandis que le piston 7.2 est lui-même repoussé dans le sens de la fermeture et vient en butée contre la butée de fin de course 10.2. On remarque à ce propos que la course des pistons 7.1, 7.2 et 7.3 est croissante depuis le piston d'ouverture partielle 7.3 le plus éloigné de la tige de liaison commune 13. En effet, si le piston 7.3 avait une course supérieure à celle du piston 7.2, lors de la manoeuvre du piston 7.3, le piston 7.2 viendrait en butée sur la butée 10.2 avant que le piston 7.3 n'ait parcouru l'ensemble de sa course.

La figure 5 illustre la position d'équilibre prise dans le cas où le fluide de commande est admis simultanément dans la chambre 18 et à l'orifice d'admission 9.1. Le piston 7.1 est alors en butée sur la butée de fin de course 10.1 et la vanne est dans sa position d'ouverture partielle minimale.

Lorsque l'on désire effectuer un réglage fin de l'ensemble des ouvertures partielles, on fait tourner l'écrou 20 au moyen des pignons coniques 30 et 31 et l'ensemble du boîtier 9 se déplace parallèlement à son axe, provoquant ainsi le déplacement correspondant de l'obturateur 5.

Bien entendu, l'invention n'est pas limitée au mode de réalisation décrit ci-dessus et on peut y apporter des variantes de réalisation qui apparaîtront à l'homme de métier.

En particulier on peut remplacer l'obturateur coulissant 5 illustré par un obturateur pivotant, la tige de liaison commune 13 étant alors reliée par une tringlerie à l'axe de pivotement de l'obturateur.

## Revendications

1. Vanne de distribution de liquide comprenant un corps de vanne (1) ayant un canal d'alimentation (2), un canal de distribution (3) et un siège (4) entre le canal d'alimentation et le canal de distribution ; un obturateur (5) monté de façon mobile en regard du siège (4) ; des moyens de commande d'obturateur pour positionner l'obturateur par rapport au siège, ces moyens de commande d'obturateur (6) comportant des moyens mobiles par échelons (7.1, 7.2, 7.3) reliés à l'obturateur par une tige de liaison commune (13) ; et des moyens de fermeture de vanne (15) en l'absence de fluide de commande caractérisée en ce que les moyens de fermeture de vanne en l'absence de fluide de commande comprennent un piston d'ouverture maximale (14) associé à la tige de liaison commune (13), un ressort (15) agissant sur le piston d'ouverture maximale (14) dans le sens de la fermeture de la vanne, et une chambre d'ouverture maximale (18) en liaison avec une face du piston d'ouverture maximale (14) opposée à l'action du ressort (15), la chambre d'ouverture maximale ayant un orifice d'alimentation en fluide de commande.

2. Vanne de distribution selon la revendication 1 caractérisée en ce que les moyens mobiles par échelons comportent des pistons d'ouverture partielle (7.1, 7.2, 7.3) solidaires de tiges (8.1, 8.2, 8.3) séparées les unes des autres et montées en série dans un boîtier de commande (9) comportant pour chaque piston d'ouverture partielle un orifice d'admission en fluide de commande (9.1, 9.2, 9.3) et une butée de fin de course (10.1, 10.2, 10.3) dans le sens de la fermeture, la course de chaque piston allant en croissant depuis le piston d'ouverture partielle (7,3) le plus éloigné de la tige de liaison commune (13).

3. Vanne de distribution selon la revendication 2 caractérisée en ce que les butées de fin de course (10.1, 10.2, 10.3) des pistons d'ouverture partielle sont amovibles.

4. Vanne de distribution selon la revendication 1 et la revendication 2 prises en combinaison, caractérisée en ce que le piston d'ouverture maximale (14) a une section efficace inférieure aux pistons d'ouverture partielle (7.1, 7.2, 7.3).

5. Vanne de distribution selon l'une des revendications 1 à 4, caractérisée en ce qu'elle comporte des moyens de réglage (20, 21) de l'ensemble des moyens mobiles par rapport au corps de vanne (1).

6. Vanne de distribution selon la revendication 5 dans laquelle les moyens mobiles par échelons sont montés dans un boîtier de commande associé au corps de vanne caractérisée en ce que les moyens de réglage comportent un écrou (20) relié au corps de vanne (1) pour tourner par rapport à celui-ci, un filetage externe (21) réalisé sur une partie du boîtier de commande (9) coaxialement à la tige de liaison et engagé dans l'écrou, et des moyens (26, 28) pour empêcher le boîtier de commande de tourner avec l'écrou.

7. Vanne de distribution selon la revendication 6, caractérisée en ce qu'elle comporte des moyens de commande de la rotation de l'écrou comprenant un premier pignon conique (30) associé à l'écrou (20) et un second pignon conique (31) associé à un mécanisme de commande à distance (32).

8. Vanne de distribution selon la revendication 7, caractérisée en ce que le mécanisme de commande à distance comporte un câble flexible (32).

## Ansprüche

1. Flüssigkeitssteuerventil, umfassend ein Ventilgehäuse (1) mit einer Zuleitung (2), einer Ableitung (3) und einem zwischen der Zuleitung und der Ableitung angeordneten Ventilsitz (4) ; ferner umfassend einen gegenüber dem Ventilsitz beweglich angeordneten Ventilkörper ; Ventilkörperverstellmittel zum Positionieren des Ventilkörpers gegenüber dem Ventilsitz, wobei die Ventilkörperverstellmittel (6) mit dem Ventilkörper über eine gemeinsame Verbindungsstange (13) verbundene, gestaffelt verstellbare Stelleinrichtungen (7.1, 7.2, 7.3) umfassen ; und eine Einrichtung zum Schließen der Ventile bei Fehlen des Steuerfluides, dadurch **gekennzeichnet,** daß die Einrichtung zum Schließen des Ventils bei Fehlen des Steuerfluides einen Maximalöffnungskolben (14) umfassen, welcher mit der gemeinsamen Verbindungsstange (13) verbunden ist, ferner eine Feder (15), die im Sinne eines Schließens des Ventils auf den Maximalöffnungskolben (14) wirkt, und eine Maximalöffnungszylinderkammer (18), die einer Kolbenseite des Maximalöffnungskolbens (14) zugeordnet ist, die der durch die Feder (15) beaufschlagten Seite abgewandt ist, wobei die Maximalöffnungszylinderkammer eine Zuführöffnung für das Steuerfluid hat.

2. Steuerventil nach Anspruch 1, dadurch **gekennzeichnet,** daß die gestaffelt verstellbaren Stelleinrichtungen Teilöffnungskolben (7.1, 7.2, 7.3) umfassen, die voneinander getrennte Kolbenstangen (8.1, 8.2, 8.3) tragen, welche hintereinander in einem Steuergehäuse (9) angeordnet sind, das für jeden der Teilöffnungskolben eine Zuführöffnung (9.1, 9.2, 9.3) für Steuerfluid und einen Wegbegrenzungsanschlag (10.1, 10.2, 10.3) in Schließrichtung hat, wobei die Verstellwege der Kolben, beginnend mit dem von der gemeinsamen Verbindungsstange (13) am weitesten entfernten Teilöffnungskolben (7.3) stufenweise zunehmen.

3. Steuerventil nach Anspruch 2, dadurch **gekennzeichnet**, daß die Wegbegrenzungsanschläge (10.1, 10.2, 10.3) der Teilöffnungskolben auswechselbar sind.

4. Steuerventil nach Anspruch 1 und Anspruch 2 in Kombination, dadurch **gekennzeichnet**, daß der Maximalöffnungskolben (14) einen kleineren Wirkungsquerschnitt hat als die Teilöffnungskolben (7.1, 7.2, 7.3).

5. Steuerventil nach einem der Ansprüche 1 bis 4, dadurch **gekennzeichnet**, daß es eine Einrichtung (20, 21) zur Lageverstellung der gesamten, die Stelleinrichtungen umfassenden Einheit gegenüber dem Ventilgehäuse (1) umfaßt.

6. Steuerventil nach Anspruch 5, wobei die gestaffelt verstelbaren Stelleinrichtungen in einem mit dem Ventilgehäuse verbundenen Steuergehäuse angeordnet sind, dadurch **gekennzeichnet**, daß die Einrichtung zur Lageverstellung eine mit dem Ventilgehäuse (1) verbundene, diesem gegenüber verdrehbare Mutter (20) umfaßt, ferner ein auf einem Teil des Steuergehäuses (9) ausgebildetes, zur Verbindungsstange koaxiales und mit der Mutter im Eingriff befindliches Außengewinde (21), und Mittel (26, 28) zum Sichern des Steuergehäuses gegen eine Verdrehung mit der Mutter.

7. Steuerventil nach Anspruch 6, dadurch **gekennzeichnet**, daß es Drehverstellmittel für die Mutter umfaßt, mit einem ersten, mit der Mutter (20) verbundenen Kegelrad (30) und einem zweiten, mit einer Fernbedienungseinrichtung (32) verbundenen Kegelrad (31).

8. Steuerventil nach Anspruch 7, dadurch **gekennzeichnet**, daß die Fernbedienungseinrichtung eine flexible Kabelanordnung (32) aufweist.

## Claims

1. A distribution valve comprising a valve body (1) equiped with a feeding duct (2), a distribution duct (3) and a seat (4) between the feeding duct and the distribution duct ; a closing member (5) movably mounted facing the seat (4), closing member control means for positioning the closing member with respect to the seat, those control means (6) comprising means movable by steps (7.1, 7.2, 7.3) connected to the closing member by a common connecting rod (13) ; and means (19) for closing said valve in absence of control fluid characterized in that said means for closing said valve in absence of control liquid comprise a maximum opening piston (14) associated to said common connecting rod (13) a spring (15) acting on said maximum opening piston (14) in the closing direction, and a maximum opening chamber (18) connected to a face of the maximum opening piston (14) opposing to the action of said spring (15), said maximum opening chamber having a fluid control supply orifice.

2. A distribution valve according to claim 1, characterized in that the means movable in steps comprises partial opening pistons (7.1, 7.2, 7.3) attached to rods (8.1, 8.2, 8.3) separate from one another and assembled in series in a control casing (9) which has, for each partial opening piston, a supply opening for the control fluid and a lug piece (10.1, 10.2, 10.3) for the end-of-run in the direction of closing, the run of each piston increasing from the partial opening piston (7.3) that is farthest from the common connecting rod (13).

3. A distribution valve according to claim 2, characterized in that the end-of-run lug pieces (10.1, 10.2, 10.3) of the partial opening pistons are movable.

4. A distribution valve according to claim 1, and claim 2, taken together, characterized in that the maximum opening piston (14) has an effective section smaller than the partial opening pistons (7.1, 7.2, 7.3).

5. A distribution valve according to one of claims 1 to 4 characterized in that it comprises setting means (20, 21) of the whole movable means with respect to the valve body (1).

6. A distribution valve according to claim 5 in which the means movable in steps are mounted in a control casing associated with the valve body, characterized in that the setting means comprises a screwnut (20) connected to the valve body (1) and rotatable relative to the latter, an external thread (21) located on a part of the control casing (9) coaxially with the connecting rod and received in the screwnut, and means (26, 28) to prevent the control casing from rotating with the screwnut.

7. A distribution valve according to claim 6, characterized in that it comprises means to control the rotation of the screwnut that comprises a first cone-shaped pinion (30) associated with the screwnut (20) and a second cone-shaped pinion (31) associated with a remote control mechanism (32).

8. A distribution valve according to claim 7, characterized in that the remote control mechanism comprises a flexible cable (32).

Fig:1

Fig. 2

## Fig. 3

## Fig. 4

## Fig. 5